# EUROPÄISCHE PATENTSCHRIFT

(11) **EP 1 362 718 B1**
(45) Veröffentlichungstag und Bekanntmachung des Hinweises auf die Patenterteilung: **05.04.2006**
(21) Anmeldenummer: 03010002.8
(22) Anmeldetag: 02.05.2003
(51) Int. Cl.: B60G 5/053, B60G 11/113, B60G 11/40

(54) **Lagerverbindung zwischen einem Blattfederende und einem Achslenker, insbesondere eines Doppelachsaggregats eines Lastkraftwagens**
Bearing connector between a leaf spring end and an axle, particularly for a tandem axle of a truck
Connecteur de support entre l'extrémité de ressort à lame et un essieu, notamment pour essieux en tandem d'un camion

(30) Priorität: 17.05.2002 DE 20207770 U
(43) Veröffentlichungstag der Anmeldung: 19.11.2003
(73) Patentinhaber: Jörn ELZA GmbH, 71336 Waiblingen (DE)
(72) Erfinder: Zawadzki, Bernd, 71409 Schwaikheim (DE); Mursinsky, Jörg, 71364 Winnenden (DE); Stummer, Josef, 85716 Unterschleissheim (DE); Bulheller, Lothar, 82140 Olching (DE)
(74) Vertreter: Neubauer, Hans-Jürgen

(56) Entgegenhaltungen:
- EP-A1- 0 554 723
- EP-A1- 0 577 961
- EP-A2- 1 002 674
- DE-C- 943 932
- US-B1- 6 206 407
- PATENT ABSTRACTS OF JAPAN Bd. 1998, Nr. 10, 31. August 1998 (1998-08-31) -& JP 10 138726 A (HINO MOTORS LTD), 26. Mai 1998 (1998-05-26)

## Beschreibung

Die Erfindung betrifft eine Lagerverbindung zwischen einem Blattfederende und einem Achslager, insbesondere eines Doppelachsaggregats eines Lastkraftwagens nach dem Oberbegriff des Anspruchs 1.

Eine bekannte Lagerverbindung zwischen einem Blattfederende und einem Achslager eines Doppelaggregats eines Lastkraftwagens (EP 1 002 674 A2) umfasst einen Federsattel, der aus einer stabilen unteren Metallplatte und einer stabilen oberen Metallplatte mit einem dazwischen festhaftend einvulkanisierten Gummikörper und einer auf der oberen Metallplatte aufvulkanisierten oberen Gummischicht besteht. Dabei ist die untere Metallplatte am oberen Bereich des Achslagers angeordnet und befestigt. Auf der an der oberen Metallplatte aufvulkanisierten oberen Gummischicht liegt das Blattfederende mit seiner Unterseite auf.

Der Gummikörper ist hier quaderförmig ausgebildet und kann durch einvulkanisierte Zwischenbleche schichtförmig unterteilt sein. Zudem können die Metallplatten, insbesondere an der Haftfläche für den Gummikörper sowie ggf. die Zwischenbleche kreisbogenförmig oder annähernd kreisbogenförmig so geformt sein, dass der zugehörige Kreismittelpunkt in einem Drehpol der Relativbewegung zwischen Achse und Blattfeder liegt.

Durch die hier quaderförmige Gestalt des Gummikörpers besteht ohne Zusatzmaßnahmen bei Höchstbelastungen die Gefahr, dass der Gummikörper ausknickt und somit der Federsattel beschädigt und zerstört wird. Daher sind hier in Fahrtrichtung und ggf. quer zur Fahrtrichtung in Horizontalrichtung sowie auch in Vertikalrichtung wirkende Anschläge vorgesehen, welche durch sich seitlich überragende Fortsätze der oberen und unteren Metallplatte gebildet sind. Diese Anschläge führen zu konstruktiv aufwendigen Gestaltungen der Metallplatten. Zudem erfolgt bei Extrembelastungen in der Wirkstellung der Anschläge eine ungünstige Anlageverbindung von Metall zu Metall mit relativ hoher Geräuschentwicklung und schnellem Verschleiß.

Aufgabe der Erfindung ist es eine gattungsgemäße Lagerverbindung zwischen einem Blattfederende und einem Achslager hinsichtlich des Federsattels so weiterzubilden, dass die Anschläge nach dem Stand der Technik entbehrlich sind.

Diese Aufgabe wird mit den Merkmalen des Anspruchs 1 gelöst.

Gemäß Anspruch 1 weist der Gummikörper in Achsrichtung gesehen eine trapezförmige Form und in Fahrzeuglängsrichtung gesehen eine im wesentlichen rechteckige Form auf. Bei unter Last stattfindenden, horizontalen Verformungen bietet diese trapezförmige Ausbildung des Gummikörpers eine optimale Abstützung, so dass kein Ausknicken des Federsattels bzw. des Gummikörpers stattfinden kann und damit die eingangs geschilderten Anschläge nicht erforderlich sind. Damit wird der Aufbau des Federsattels insgesamt einfacher und kostengünstiger mit weiteren Vorteilen hinsichtlich einer reduzierten Geräuschentwicklung und eines reduzierten Verschleißes bei Höchstbelastungen.

In einer besonders bevorzugten Ausführungsform nach Anspruch 2 ist der Gummikörper symmetrisch ausgebildet, wobei die Trapezform gleichschenkelig ausgeführt ist mit einem Anstellwinkel in einem Bereich von etwa 65° bis 75°, vorzugsweise 70°. Der Gummikörper soll in Fahrzeuglängsrichtung gesehen von einer Rechteckform geringfügig abweichen und eine Trapezform mit einem Anstellwinkel von etwa 85° bis 89°, vorzugsweise 87° bilden. Damit werden bei üblichen Gegebenheiten und Belastungen, wie sie in Verbindung mit Doppelachsaggregaten an Lastkraftwagen auftreten optimale Abstützungen von Blattfederenden erzielt.

In einer Weiterbildung nach Anspruch 3 überragt die obere Metallplatte mit der oberen aufvulkanisierten Gummischicht den Gummikörper beidseitig in Fahrzeuglängsrichtung mit Metallplattenendbereichen, wobei diese nach unten leicht abgeknickt sind. Durch diese Abknickung kann die relativ dicke obere Metallplatte mit der relativ dicken, aufvulkanisierten Gummischicht der Biegelinie einer eingefederten, aufliegenden Blattfeder folgen. Die auf die obere Metallplatte aufvulkanisierte relativ dicke Gummischicht überträgt den Druck von den Blattfederenden auf die obere Metallplatte, die wiederum eine optimierte Spannungsverteilung in den Gummikörper mit seiner Trapezform weiterleitet.

Die obere relativ dicke Gummischicht dient weiter zur Entkopplung von kleinen Schwingungen und Geräuschen zwischen Blattfeder und Achse. Zudem finden zwischen dem Blattfederende und dieser Gummischicht keine Relativbewegungen statt, da Bewegungen in allen drei Raumrichtungen molekular in der Gummischicht aufgenommen werden, so dass vorteilhaft hier keine Reibung und damit kein Abrieb und kein Verschleiß entsteht. Für die molekulare Aufnahme kleinerer Bewegungen in dieser Gummischicht ist diese in ihrer Gummischichthöhe entsprechend dick zu dimensionieren.

Eine weitere Verbesserung hinsichtlich des Abstützverhaltens und gleichmäßiger Belastungsverteilungen im Gummikörper ergibt sich nach Anspruch 4 dadurch, dass im Gummikörper wenigstens ein im Vergleich zu der unteren und oberen Metallplatte dünneres Zwischenblech einvulkanisiert ist welches in Fahrtrichtung beidseitig mit Zwischenblechendbereichen aus dem Gummikörper vorsteht. Eine weitere Verbesserung ergibt sich zudem mit den Merkmalen des Anspruchs 5, wobei die teilweise noch im Gummikörper enthaltenen Zwischenblechendbereiche entsprechend den Metallplattenendbereichen der oberen und ggf. der unteren Metallplatte nach unten leicht abgeknickt sind. Damit folgen auch die Zwischenbleche etwa der Form der Biegelinie einer eingefederten Blattfeder. Mit anderen Worten nähern sich die Gummischichtformen in Achsrichtung gesehen einer Radius-Kontur, so dass bei einer um einen Drehpol veranlassten Kreisbewegung die durch die Zwischenbleche und Metallplatten begrenzten Gummischichten im Randbereich entlastet werden im Vergleich gegenüber eben ausgeführten Zwischenblechen bzw. ebenen Gummischichten. In einer bevorzugten Ausführungsform nach Anspruch 6 sind drei Zwischenbleche vorgesehen, die so im Gummikörper angeordnet sind, dass vier Horizontalschichten gebildet sind, welche in der Dicke von oben nach unten zunehmen.

Wenn der Bauraum im Bereich der Achslagerung begrenzt ist kann zur Verringerung der Gesamt-Bauhöhe gemäß Anspruch 7 in der unteren Metallplatte eine nach oben weisende Ausnehmung enthalten sein, in der der Gummikörper mit seinem unteren Bereich aufgenommen und mit der Unterseite anvulkanisiert ist. Starke Materialstärken sind an der unteren Metallplatte für Befestigungen insbesondere in den Gummikörper umgebenden Rand- und Eckbereichen erforderlich.

In einer weiteren Ausführungsvariante nach Anspruch 8 kann die untere Metallplatte zweiteilig mit einem Oberplattenteil und Unterplattenteil ausgeführt sein, wobei auf das Oberplattenteil der Gummikörper aufvulkanisiert ist. Das Unterplattenteil enthält eine nach oben weisende Ausnehmung, in die die Oberplatte eingesetzt und mit dem Unterplattenteil verschraubt ist. Dadurch können sich herstellungstechnische und montagetechnische Freiräume ergeben, die je nach den speziellen Einbaumöglichkeiten nutzbar sind. Insbesondere kann auch hier eine Ausführung mit relativ geringer Gesamtbauhöhe erstellt werden.

Für eine Befestigung der unteren Metallplatte und damit des Federsattels kann in an sich bekannter Weise nach Anspruch 9 die untere Metallplatte als Schmiedeteil rechteckig ausgeführt sein, wobei sie die Unterfläche des Gummikörpers allseitig mit einem Randüberstand überragt. In den vier Ecken der Metallplatte, insbesondere im Bereich des Randüberstands können nach unten weisende Fortsätze angeformt sein, in denen von unten her Gewindebohrungen zum Einschrauben von Befestigungsschrauben angebracht sind.

Eine besonders bevorzugte Anordnung und Montage ergibt sich dann nach Anspruch 10, wenn das Achslager in der Art einer Spannklammer ausgebildet ist, bei der die untere Metallplatte des Federsattels das obere Klammerteil bildet, welches mit in die Gewindebohrungen eingeschraubten Spannschrauben gegen ein die Achse von unten her abstützendes Längsträgerunterteil verspannt ist. Die untere Metallplatte hat somit hier eine Doppelfunktion als Teil des Federsattels auf welchem der Gummikörper aufvulkanisiert ist und zugleich als Spannklammerteil für eine Achshalterung.

Anhand einer Zeichnung wird die Erfindung näher erläutert.

Es zeigen:
- Fig.1: eine perspektivische Ansicht einer Lagerverbindung zwischen einem Blattfederende und einem Achslager eines Doppelaggregats eines Lastkraftwagens,
- Fig.2: eine Seitenansicht eines Federsattels als Drucklager in Achsrichtung gesehen,
- Fig.3: den Federsattel nach Figur 2 in Fahrzeuglängsrichtung gesehen,
- Fig.4: eine alternative Ausführungsform eines Federsattels und
- Fig.5: eine weitere alternative Ausführungsform eines Federsattels.

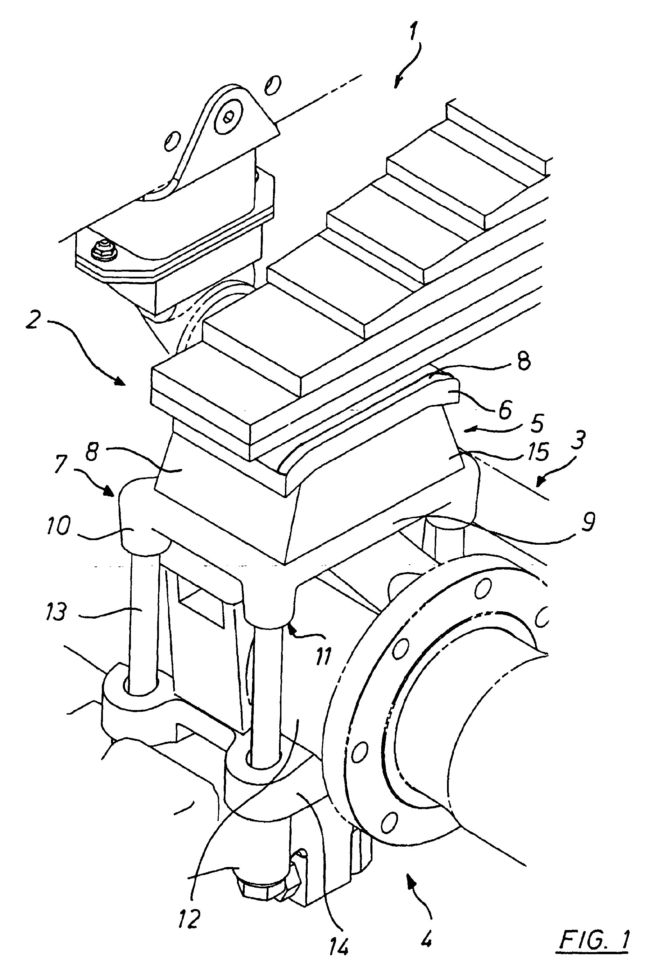

In Fig.1 ist eine Lagerverbindung 1 zwischen einem mehrlagigen Blattfederende 2 und einem Achslager 3 eines Doppelachsaggregats 4 eines Lastkraftwagens gezeigt. Die Lagerverbindung 1 besteht aus einem Federsattel 5, welcher eine obere Metallplatte 6 und eine untere Metallplatte 7 umfasst mit einem dazwischen einvulkanisierten Gummikörper 8. Auf der oberen Metallplatte ist zudem eine obere Gummischicht 8 aufvulkanisiert.

Die untere Metallplatte 7 ist als Schmiedeteil rechteckig ausgeführt und überragt die Unterfläche des Gummikörpers 8 allseitig mit einem Randüberstand 9. In den vier Ecken der unteren Metallplatte 7 sind nach unten weisende Fortsätze 10 angeformt, in denen von unten her Gewindebohrungen 11 angebracht sind.

Das Achslager für den Achsbereich 12 ist in der Art einer Spannklammer ausgebildet, bei der die untere Metallplatte 7 des Federsattels 5 das obere Klammerteil bildet, welches mit in die Gewindebohrungen 11 eingeschraubten Spannschrauben 13 gegen ein den Achsbereich 12 von unten her abstützendes Längsträgerunterteil 14 in der Art eines Lagerbocks verspannt ist.

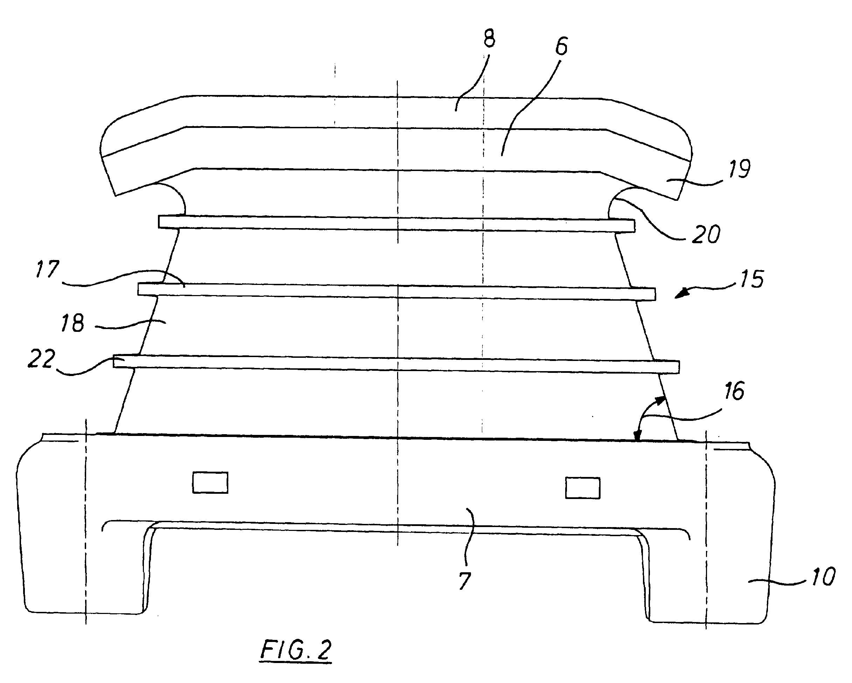

In Fig. 2 ist eine Seitenansicht des Federsattels 5 in Achsrichtung gesehen dargestellt mit der oberen Metallplatte 6 mit aufvulkanisierter oberer Gummischicht 8 und der unteren Metallplatte 7 mit den angeformten Fortsätzen 10 und dem dazwischen eingeformten Gummikörper 15. In dieser Ansicht hat der Gummikörper 15 eine gleichschenkelige Trapezform mit einem Anstellwinkel 16 von ca. 70°. Im Gummikörper 15 sind etwa horizontal verlaufende drei Zwischenbleche 17 einvulkanisiert, die den Gummikörper 15 in vier etwa gleich starke Gummihorizontalschichten 18 unterteilen, welche jedoch von oben nach unten in ihrer Dicke etwas zunehmen. Die Zwischenbleche sind hier eben und stehen zudem mit Endbereichen 19 in Fahrtrichtung über den Gummikörper 15 vor.

Die obere, relativ dicke Metallplatte 6 mit der ebenfalls relativ dicken aufvulkanisierten Gummischicht 8 überragt den oberen Bereich des Gummikörpers 15 beidseitig mit Metallplattenendbereichen 19, wobei diese nach unten leicht abgeknickt sind und somit einer Biegelinie des Blattfederendes bei eingefederter Blattfeder folgen. Um hier Belastungsspitzen im Gummikörper 15 zu vermeiden ist der Übergang zu den Metallplattenendbereichen 19 in einer Bogenform 20 ausgeführt.

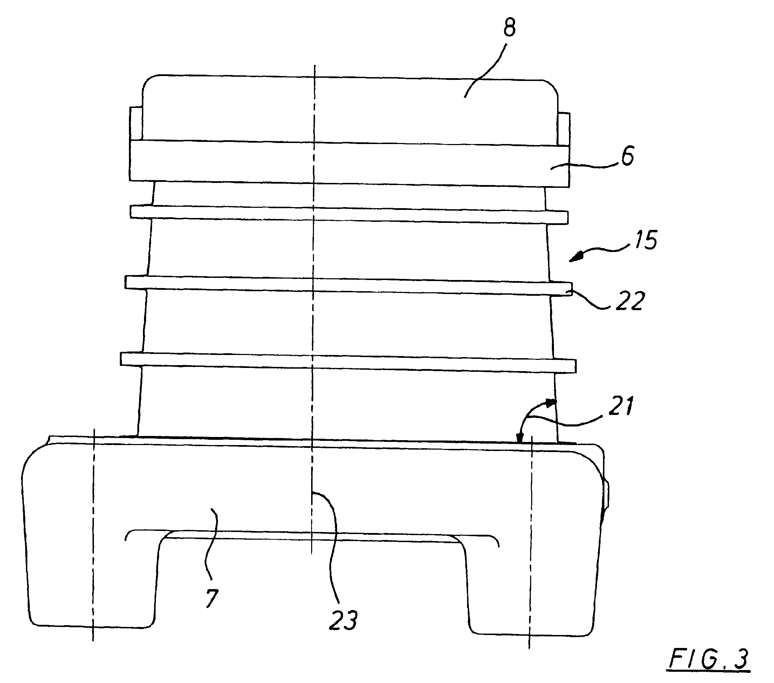

In Fig. 3 ist eine Seitenansicht des Federsattels 5 in Fahrzeuglängsrichtung gesehen dargestellt mit der unteren Metallplatte 7 dem Gummikörper 15 der oberen Metallplatte 6 und der oberen Gummischicht 8. Der Gummikörper 15 ist in dieser Ansicht nahezu rechteckig ausgebildet mit einer geringförmigen Trapezform mit einem Anstellwinkel 21 von ca. 87°. Die Zwischenblechendbereiche 22 stehen auch in dieser Ansicht seitlich aus dem Gummikörper 15 vor. Aufgrund spezieller Einbaugegebenheiten kann die Mittellängsebene 23 bezogen auf die untere Metallplatte 7, wie dargestellt gegenüber der Mittellängsebene des Gummikörpers 15 versetzt liegen.

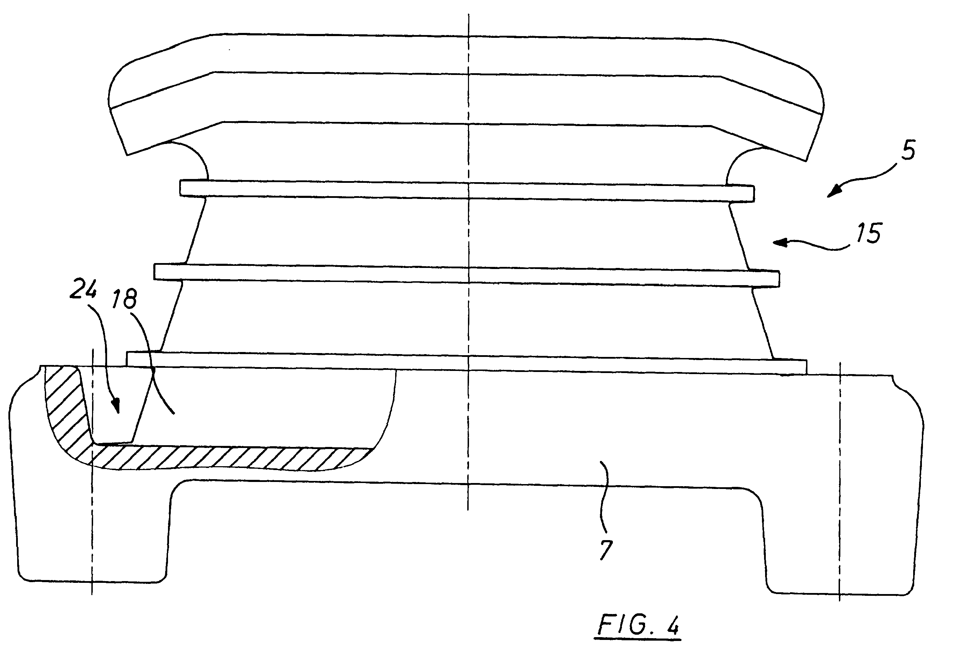

In Fig. 4 ist eine in Achsrichtung gesehene Seitenansicht einer etwas modifizierten Ausführungsform eines Federsattels 5 dargestellt, der in allen wesentlichen Merkmalen entsprechend dem Federsattel aus den Figuren 2 und 3 aufgebaut ist. Der Unterschied besteht darin, dass hier die untere Metallplatte 7 eine nach oben weisende Ausnehmung 24 aufweist wie in einem Teilschnitt gezeigt. In dieser Ausnehmung ist der untere Bereich bzw. die unterste Gummihorizontalschicht 18 des Gummikörpers 15 aufgenommen, so dass hiermit eine Bauhöhenreduzierung des Federsattels 5 möglich ist. Die Ausnehmung 24 umgibt den unteren Bereich des Gummikörpers 15 mit einem Rand als Freiraum, so dass sich der Gummikörper 15 entsprechend seiner Belastung seitlich frei bewegen kann.

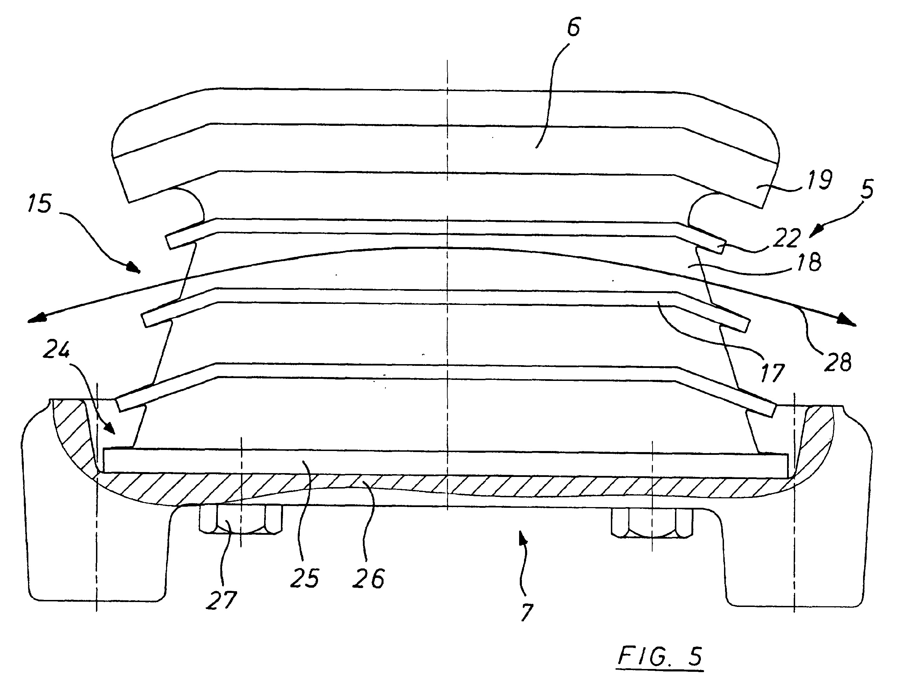

Eine weitere modifizierte Ausführungsform eines Federsattels 5 ist in der entsprechenden Seitenansicht in Fig. 5 dargestellt. Auch dort ist der Gummikörper 15 mit seinem unteren Bereich in einer Ausnehmung 24 für eine Gesamthöhenreduzierung aufgenommen. Die untere Metallplatte 7 ist hier jedoch zweiteilig ausgeführt und besteht aus einem Oberplattenteil 25 und aus einem Unterplattenteil 26. Auf dem Oberplattenteil 25 ist der Gummikörper 15 aufvulkanisiert. Das Oberplattenteil 25 ist auf das Unterplattenteil 26 aufgesetzt und mittels Schrauben 27 verschraubt.

Auch in der Ausführungsform nach Fig. 5 überragen die Metallplattenendbereiche 19 der oberen Metallplatte 6 beidseitig den Gummikörper 15 und sind dort leicht nach unten abgeknickt. Zudem sind auch hier entsprechend die Zwischenblechendbereiche 22 der Zwischenbleche 17 nach unten leicht abgeknickt, so dass die Form der Gummihorizontalschichten 18 einem Kreisbogen 28 mit einem Radius in einem Drehpol angenähert sind.

## Patentansprüche

1. Lagerverbindung (1) zwischen einem Blattfederende (2) und einem Achslager (3), insbesondere eines Doppelachsaggregats eines Lastkraftwagens
- mit einem Federsattel (5), der aus einer stabilen unteren Metallplatte (7) und einer stabilen oberen Metallplatte (6) mit einem dazwischen festhaftend anvulkanisierten Gummikörper (15) und einer auf der oberen Metallplatte (6) aufvufkanisierten, oberen Gummischicht (8) besteht, wobei
- die untere Metallplatte (7) am oberen Bereich des Achslagers (3) angeordnet ist und
auf der oberen Gummischicht (8) das Blattfederende (2) mit seiner Unterseite aufliegt,
**dadurch gekennzeichnet,**
**dass** der Gummikörper (15) in Achsrichtung gesehen eine trapezförmige Form und in Fahrzeuglängsrichtung gesehen eine im wesentlichen rechteckige Form aufweist.

2. Lagerverbindung nach Anspruch 1, **dadurch gekennzeichnet, dass** die in Achsrichtung gesehene Trapezform des Gummikörpers (15) gleichschenkelig ist mit einem Anstellwinkel (16) in einem Bereich von etwa 65° bis 75°, vorzugsweise 70° und der Gummikörper (15) in Fahrzeuglängsrichtung gesehen eine von einer Rechteckform geringförmig abweichende Trapezform mit einem Anstellwinkel (21) von etwa 85° bis 89°, vorzugsweise 87° aufweist.

3. Lagerverbindung nach Anspruch 1 oder 2, **dadurch gekennzeichnet, dass** die obere Metallplatte (6) mit der oberen aufvulkanisierten Gummischicht (8) den Gummikörper (15) in Fahrzeuglängsrichtung beidseitig mit Metallplattenendbereichen (19) überragt und diese Metallplattenendbereiche (19) nach unten leicht abgeknickt sind.

4. Lagerverbindung nach einem der Ansprüche 1 bis 3, **dadurch gekennzeichnet, dass** im Gummikörper (15) wenigstens ein im Vergleich zu der unteren und oberen Metallplatte (6, 7) dünneres Zwischenblech (17) einvulkanisiert ist, welches in Fahrtrichtung beidseitig mit Zwischenblechendbereichen (22) aus dem Gummikörper (15) vorsteht.

5. Lagerverbindung nach Anspruch 4, **dadurch gekennzeichnet, dass** die Zwischenblechendbereiche (22) entsprechend den Metallplattenendbereichen (19) der oberen Metallplatte (6) nach unten leicht abgeknickt sind.

6. Lagerverbindung nach Anspruch 4 oder 5, **dadurch gekennzeichnet, dass** drei Zwischenbleche (17) vorgesehen sind, die den Gummikörper in vier Gummihorizontalschichten (18) trennen, deren Dicke jeweils von oben nach unten zunimmt.

7. Lagerverbindung nach einem der Ansprüche 1 bis 6, **dadurch gekennzeichnet, dass** in der unteren Metallplatte (7) eine nach oben weisende Ausnehmung (24) enthalten ist, in der der Gummikörper (15) mit seinem unteren Bereich aufgenommen und mit der Unterseite anvulkanisiert ist.

8. Lagerverbindung nach einem der Ansprüche 1 bis 6, **dadurch gekennzeichnet,**
**dass** die untere Metallplatte (7) zweiteilig mit einem Oberplattenteil (25) und Unterplattenteil (26) ausgeführt ist, indem auf das Oberplattenteil (25) der Gummikörper (15) aufvulkanisiert ist, und
**dass** das Unterplattenteil (26) eine nach oben weisende Ausnehmung enthält, in die das Oberplattenteil (25) eingesetzt und mit dem Unterplattenteil (26) verschraubt ist.

9. Lagerverbindung nach einem der Ansprüche 1 bis 8, **dadurch gekennzeichnet,**
**dass** die untere Metallplatte (7) als Schmiedeteil rechteckig ausgeführt ist und die Unterfläche des Gummikörpers (15) allseitig mit einem Randüberstand (9) überragt,
**dass** in den vier Ecken der unteren Metallplatte (7) nach unten weisende Fortsätze (10) angeformt sind, in denen von unten her Gewindebohrungen (11) angebracht sind.

10. Lagerverbindung nach Anspruch 9, **dadurch gekennzeichnet, dass** das Achslager (3) in der Art einer Spannklammer ausgebildet ist, bei der die untere Metallplatte (7) des Federsattels (5) das obere Klammerteil (11) bildet, welches mit in die Gewindebohrungen eingeschraubten Spannschrauben (13) gegen ein die Achse (12) von unten her abstützendes Längsträgerunterteil (14) verspannt ist.

## Claims

1. Bearing connection (1) between a leaf spring end (2) and an axle bearing (3), in particular of a twin-axle unit of a heavy goods vehicle
- having a spring seat (5) which comprises a robust, lower metal plate (7) and a robust, upper metal plate (6) with a rubber body (15) which is integrally vulcanized in between in an adherent manner and an upper rubber layer (8) which is integrally vulcanized onto the upper metal plate (6),
- the lower metal plate (7) being arranged at the upper region of the axle bearing (3) and
- the underside of the leaf spring end (2) bearing against the upper rubber layer (8),
**characterized**
**in that** the rubber body (15) is trapezoidal in shape when viewed in the axle direction and is substantially rectangular in shape when viewed in the vehicle longitudinal direction.

2. Bearing connection according to Claim 1, **characterized in that** the trapezoidal shape of the rubber body (15) as viewed in the axle direction is that of an isosceles trapezoid with a base angle (16) in a range from approximately 65° to 75°, preferably 70°, and the rubber body (15), when viewed in the vehicle longitudinal direction, is of a near-rectangular trapezoidal shape with a base angle (21) from approximately 85° to 89°, preferably 87°.

3. Bearing connection according to Claim 1 or 2, **characterized in that** the upper metal plate (6) having the upper integrally vulcanized rubber layer (8) projects beyond the rubber body (15) on both sides in the vehicle longitudinal direction with metal plate end regions (19), and these metal plate end regions (19) are bent slightly downwards.

4. Bearing connection according to one of Claims 1 to 3, **characterized in that** at least one intermediate metal plate (17), which is thinner than the upper and lower metal plates (6, 7), is integrally vulcanized in the rubber body (15), which intermediate metal plate (17) protrudes out of the rubber body (15) on both sides in the direction of travel with intermediate metal plate end regions (22).

5. Bearing connection according to Claim 4, **characterized in that** the intermediate metal plate end regions (22) are bent slightly downwards in a corresponding manner to the metal plate end regions (19) of the upper metal plate (6).

6. Bearing connection according to Claim 4 or 5, **characterized in that** three intermediate metal plates (17) are provided which divide the rubber body into four horizontal rubber layers (18), the respective thickness of which increases from top to bottom.

7. Bearing connection according to one of Claims 1 to 6, **characterized in that** the lower metal plate (7) comprises a recess (24) which faces upwards and in which the lower region of the rubber body (15) is held and the underside of the rubber body (15) is integrally vulcanized.

8. Bearing connection according to one of Claims 1 to 6, **characterized**
**in that** the lower metal plate (7) is embodied in two parts with an upper plate part (25) and a lower plate part (26) by virtue of the fact that the rubber body (15) is integrally vulcanized on the upper plate part (25), and
**in that** the lower plate part (26) comprises a recess which faces upwards and in which the upper plate part (25) is inserted and screwed to the lower plate part (26).

9. Bearing connection according to one of Claims 1 to 8, **characterized**
**in that** the lower metal plate (7) is embodied as a rectangular forged part and projects beyond the lower face of the rubber body (15) on all sides with an edge projection (9),
**in that** downwardly facing extensions (10) are integrally formed in the four corners of the lower metal plate (7), into which extensions (10) threaded bores (11) are formed from below.

10. Bearing connection according to Claim 9, **characterized in that** the axle bearing (3) is embodied in the form of a clamping bracket, in the case of which the lower metal plate (7) of the spring seat (5) forms the upper clamp part (11) which is clamped against a longitudinal member lower part (14), which supports the axle (12) from below, by means of clamping screws (13) which are screwed into the threaded bores.

## Revendications

1. Raccordement de palier (1) entre une extrémité de ressort à lame (2) et un palier d'essieu (3), notamment d'un agrégat d'essieu tandem d'un camion poids lourd
- comprenant un étrier de ressort (5) qui est constitué d'une plaque métallique inférieure stable (7) et d'une plaque métallique supérieure stable (6) dotée d'un corps caoutchouté (15) vulcanisé de manière à adhérer entre celles-ci et d'une couche caoutchoutée supérieure (8) vulcanisée sur la plaque métallique supérieure (6),
- la plaque métallique inférieure (7) étant disposée sur la zone supérieure du palier d'essieu (3) et
- l'extrémité de ressort à lame (2) reposant avec sa face inférieure sur la couche caoutchoutée supérieure (8),
**caractérisé en ce que**
le corps caoutchouté (15) présente, vu dans la direction de l'essieu, une forme trapézoïdale, et vu dans la direction longitudinale du véhicule, une forme sensiblement rectangulaire.

2. Raccordement de palier selon la revendication 1, **caractérisé en ce que** la forme trapézoïdale, vue dans la direction de l'essieu, du corps caoutchouté (15) est isocèle avec un angle d'inclinaison (16) dans une plage d'approximativement 65° à 75°, de préférence 70°, et le corps caoutchouté (15), vu dans la direction longitudinale du véhicule, présente une forme trapézoïdale s'écartant légèrement d'une forme rectangulaire avec un angle d'inclinaison (21) d'approximativement 85° à 89°, de préférence 87°.

3. Raccordement de palier selon la revendication 1 ou 2, **caractérisé en ce que** la plaque métallique supérieure (6) dotée de la couche caoutchoutée supérieure vulcanisée (8) dépasse de part et d'autre avec les zones d'extrémité des plaques métalliques (19) du corps caoutchouté (15) dans la direction longitudinale du véhicule et ces zones d'extrémité de plaques métalliques (19) sont légèrement coudées vers le bas.

4. Raccordement de palier selon l'une quelconque des revendications 1 à 3, **caractérisé en ce qu'**au moins une tôle intermédiaire (17) plus mince par comparaison aux plaques métalliques inférieure et supérieure (6, 7), qui dépasse du corps caoutchouté (15) de part et d'autre avec des zones d'extrémité de tôle intermédiaire (22) dans la direction de conduite, est vulcanisée dans le corps caoutchouté (15).

5. Raccordement de palier selon la revendication 4, **caractérisé en ce que** les zones d'extrémité de tôle intermédiaire (22) sont légèrement coudées vers le bas en correspondance des zones d'extrémité de plaque métallique (19) de la plaque métallique supérieure (6).

6. Raccordement de palier selon la revendication 4 ou 5, **caractérisé en ce que** trois tôles intermédiaires (17) sont prévues, qui séparent le corps caoutchouté en quatre couches horizontales caoutchoutées (18), dont l'épaisseur croit respectivement de haut en bas.

7. Raccordement de palier selon l'une quelconque des revendications 1 à 6, **caractérisé en ce que** la plaque métallique inférieure (7) contient un évidement (24) orienté vers le haut, dans lequel le corps caoutchouté (15) est reçu avec sa zone inférieure et vulcanisé avec sa face inférieure.

8. Raccordement de palier selon l'une quelconque des revendications 1 à 6, **caractérisé en ce que**
la plaque métallique inférieure (7) est conçue en deux parties avec une partie de plaque supérieure (25) et une partie de plaque inférieure (26), en vulcanisant le corps caoutchouté (15) sur la partie de plaque supérieure (25), et
**en ce que** la partie de plaque inférieure (26) contient un évidement orienté vers le haut, dans lequel la partie de plaque supérieure (25) est insérée et vissée à la partie de plaque inférieure (26).

9. Raccordement de palier selon l'une quelconque des revendications 1 à 8, **caractérisé en ce que**
la plaque métallique inférieure (7) est conçue à angles droits comme une pièce forgée et la surface inférieure du corps caoutchouté (15) dépasse de tous les côtés avec une saillie en bordure (9),
**en ce que** des prolongements (10) orientés vers le bas, dans lesquels des alésages filetés (11) sont aménagés depuis le bas, sont formés dans les quatre coins de la plaque métallique inférieure (7).

10. Raccordement de palier selon la revendication 9, **caractérisé en ce que** le palier d'essieu (3) est conçu à la façon d'une pince de serrage, dans laquelle la plaque métallique inférieure (7) de l'étrier de ressort (5) forme la partie de serrage supérieure (11), laquelle est déformée par les vis de serrage (13) vissées dans les alésages filetés contre une partie inférieure de longeron (14) soutenant l'axe (12) depuis le bas.
